# EUROPEAN PATENT APPLICATION

(11) **EP 4 512 669 A1**
(43) Date of publication of application: **26.02.2025**
(21) Application number: 23830375.4
(22) Date of filing: 29.06.2023
(51) Int. Cl.: B60R 13/04

(54) **EXTERIOR DECORATION ASSEMBLY AND AUTOMOBILE**

(30) Priority: 30.06.2022 CN 202210763783
(71) Applicant: Fuyao Glass Industry Group Co., Ltd., Fuqing, Fujian 350300 (CN)
(72) Inventor: LIN, Qiming, Fuzhou, Fujian 350300 (CN); ZHANG, Ke, Fuzhou, Fujian 350300 (CN); CHEN, Hua, Fuzhou, Fujian 350300 (CN); OU, Xiuyong, Fuzhou, Fujian 350300 (CN); JIANG, Lixing, Fuzhou, Fujian 350300 (CN)
(74) Representative: Herrero & Asociados, S.L.
(86) International application number: PCT/CN2023/103551
(87) International publication number: WO 2024/002204

(57) **Abstract**

The present application discloses an exterior decoration assembly (10) and an automobile. The exterior decoration assembly (10) comprises glass (100), a first fixing member (200), an exterior trim (400) and a second fixing member (300). The glass (100) comprises a mounting surface (120) and a rear surface (130) opposite to the mounting surface (120), and the glass (100) has a mounting hole (110) penetrating through the mounting surface (120). At least a portion of the structure of the first fixing member (200) is disposed in the mounting hole (110) and is fixedly connected to the glass (100), and along an axial direction of the mounting hole (110), the first fixing member (200) is located at a side of the mounting surface (120) facing the rear surface (130). The exterior trim (400) is located on a side at which the mounting surface (120) is located, and the exterior trim (400) is connected to a side of the first fastener (200) close to the mounting surface (120) by means of the second fastener (300).

## Description

### CROSS-REFERENCE TO RELATED APPLICATIONS

This application claims priority to Chinese Patent Application No. 2022107637833, entitled "EXTERIOR DECORATION ASSEMBLY AND AUTOMOBILE" and filed on June 30, 2022, the entire contents of which are incorporated herein by reference.

### TECHNICAL FIELD

The present disclosure relates to the field of automotive technology, and in particular, to an exterior decoration assembly and an automobile.

### BACKGROUND

Plastic exterior decoration members on the glass in the exterior decoration assembly are mostly integrated with the glass by means of tape, polyurethane (PU) glue, hot melt sticks and bars, claws and the like. After integration, it is impossible to be disassembled and forcible disassembly will cause damage to the exterior decoration members. In addition, in some exterior decoration assemblies, an assembly structure is provided on the installation surface of the glass, and the exterior decoration members are installed with the glass through the assembly structure. In this case, after the exterior decoration members and the glass are assembled, the flush between the exterior decoration members and the glass is relatively large, which thus increases wind noise and also affects the installation of other components.

### SUMMARY

According to various embodiments of the present disclosure, an exterior decoration assembly and an automobile are provided.

The technical solution is as follows.

In one aspect, the present disclosure relates to an exterior decoration assembly, including a glass, a first fixing member, an exterior decoration member and a second fixing member. The glass includes a mounting surface and a rear surface opposite to the mounting surface, and the glass is provided with a mounting hole extending through the mounting surface. At least a partial structure of the first fixing member is provided in the mounting hole and fixedly connected to the glass, and the first fixing member is located on a side of the mounting surface facing the rear surface along an axial direction of the mounting hole. The exterior decoration member is located on a side where the mounting surface is located, and the exterior decoration member is connected to a side of the first fixing member adjacent to the mounting surface by the second fixing member.

The technical solution is further illustrated below.

In one of the embodiments, a partial structure of the first fixing member protrudes from the mounting surface along the mounting hole and is connected to the second fixing member.

In one of the embodiments, the first fixing member includes a main body part and a fixing part that are connected to each other, a volume of the main body part is greater than a volume of the fixing part, the main body part is located on a side of the mounting surface facing the rear surface, and a partial structure of the fixing part extends out of the mounting hole and is connected to the second fixing member.

In one of the embodiments, along an axial direction of the mounting hole, the first fixing member is located on a side of the mounting surface facing the rear surface, and the second fixing member is configured as being capable of being detachably connected to the first fixing member by extending into the mounting hole along a side of the mounting surface, such that the exterior decoration member is connected to the glass.

In one of the embodiments, the mounting hole extends from the mounting surface to the rear surface along a thickness direction of the glass, and a partial structure of the first fixing member extends into the mounting hole from a side of the rear surface, and a remaining structure of the first fixing member is provided outside the mounting hole and located on the side of the rear surface.

In one of the embodiments, the exterior decoration assembly further includes an encapsulation connected to the rear surface, and the structure of the first fixing member located outside the mounting hole is provided inside the encapsulation.

In one of the embodiments, the glass, the first fixing member and the encapsulation are integrally formed.

In one of the embodiments, the exterior decoration member is provided with a connection hole correspondingly connected to the mounting hole, and one end of the first fixing member is fixedly provided in the connection hole, and another end of the second fixing member extends through the connection hole, extends into the mounting hole, and is detachably connected to the first fixing member.

In one of the embodiments, the connection hole is a stepped hole, one end of the second fixing member is limitedly fitted with a step surface of the stepped hole, and another end of the second fixing member extends through the stepped hole, extends into the mounting hole, and is detachably connected to the first fixing member.

In one of the embodiments, the exterior decoration member is provided with a mounting groove, and the connection hole extends through a bottom wall of the mounting groove, and the exterior decoration assembly further includes a flip cover movably provided on the exterior decoration member and configured to open or close the mounting groove.

In one of the embodiments, the exterior decoration member covers the mounting surface.

In one of the embodiments, a sealing member is provided between a peripheral side of a partial structure of the exterior decoration member covering the mounting surface and the mounting surface.

In one of the embodiments, one of the first fixing member and the second fixing member is provided with an external thread structure, and another one is provided with an internal thread hole, and the external thread structure is fitted and connected to the internal thread hole;
or one of the first fixing member and the second fixing member is a first snap-fit member, and another one is a second snap-fit member in a snap-fit cooperation with the second snap-fit member.

In one of the embodiments, a number of the mounting hole, a number of the first fixing member, and a second fixing member is at least two and corresponds one to one;
a part of the first fixing member is provided with an external thread structure, a corresponding part of the second fixing member is provided with an internal thread hole matching with the external thread structure, a remaining part of the first fixing member is provided with a first snap-fit member, and a remaining part of the second fixing member corresponding to the remaining part of the first fixing member is provided with a second snap-fit member in a snap-fit cooperation with the first snap-fit member.

In another aspect, the present disclosure also involves an automobile, including the exterior decoration assembly as described in any one of the above embodiments.

### BRIEF DESCRIPTION OF THE DRAWINGS

In order to more clearly illustrate the technical solutions in embodiments of the present disclosure or the conventional art, the accompanying drawings used in the description of the embodiments or the conventional art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a top view showing an exterior decoration assembly with a flip cover in an open state according to one embodiment of the present disclosure;
FIG. 2 is a perspective view showing an exterior decoration assembly with a flip cover in an open state according to one embodiment;
FIG. 3 is a cross-sectional view taken along line A-A in FIG. 1;
FIG. 4 is a schematic view showing a glass on a side of a mounting surface according to one embodiment;
FIG. 5 is a schematic view of the glass in a viewing angle of a rear surface according to one embodiment;
FIG. 6 is a partially enlarged view of A in FIG. 4.

### Explanation of reference signs:

10. exterior decoration assembly; 100. glass; 110. mounting hole; 120. mounting surface; 130. rear surface; 200. first fixing member; 210. main body part; 220. fixing part; 300. second fixing member; 400. exterior decoration member; 410. mounting groove; 412. connection hole; 500. encapsulation; 600. flip cover.

### DETAILED DESCRIPTION OF EMBODIMENTS

The technical solutions in the embodiments of the present disclosure will be described clearly and completely below with reference to the accompanying drawings in the embodiments of the present disclosure. The described embodiments are merely some of rather than all of the embodiments of the present disclosure. All other embodiments acquired by those skilled in the art without creative efforts based on the embodiments of the present disclosure shall fall within the protection scope of the present disclosure.

In the description of the present disclosure, it should be understood that, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present disclosure and simplify the description only, rather than indicating or implying that the apparatus or element referred to must have a particular orientation or be constructed and operated in a particular orientation, and therefore are not to be interpreted as limiting the present disclosure.

In addition, the terms "first" and "second" are used for descriptive purposes only, which cannot be construed as indicating or implying a relative importance, or implicitly specifying the number of the indicated technical features. Thus, the features defined with "first" and "second" may explicitly or implicitly include one or more features. In the description of the present disclosure, "a plurality of" means two or more, such as two or three, unless otherwise defined explicitly and specifically.

The exterior decoration assembly includes glass and an exterior decoration member. Traditional glass and exterior decoration member are generally integrated by means of tape or hot melt sticks and bars, and it is impossible to be disassembled. In addition, in some exterior decoration assemblies, the glass and the exterior decoration member are generally assembled through structures such as hooks. The assembly structures such as hooks are provided between the glass and the exterior decoration member, making the flush between the glass and the exterior decoration member after assembly large, thus affecting the installation of other components.

In view of this, this present disclosure provides an exterior decoration assembly. In the exterior decoration assembly, the structure of the exterior decoration member and the glass after assembly has a low wind noise, and does not affect the mounting of other components. Moreover, the exterior decoration member and the glass can be disassembly.

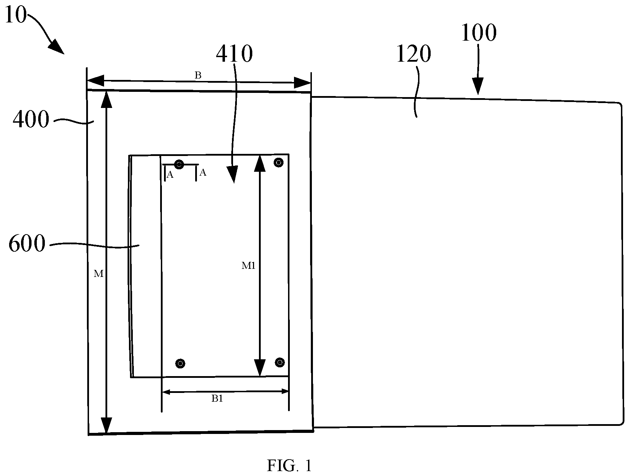

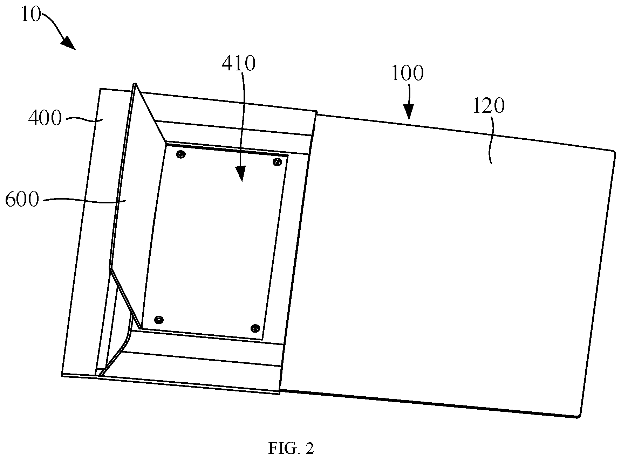

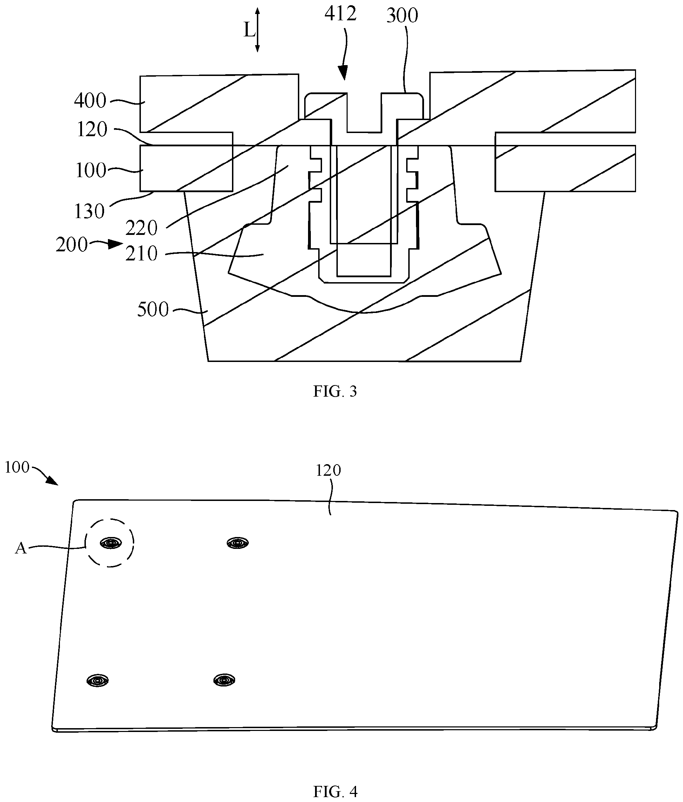

FIG. 1 is a top view showing an exterior decoration assembly 10 with a flip cover 600 in an open state. FIG. 2 is a perspective view showing the exterior assembly 10 with the flip cover 600 in an open state. FIG. 3 is a cross-sectional view taken along line A-A in FIG. 1. FIG. 4 is a schematic view showing the glass 100 on a side of a mounting surface 100.

Referring to FIGS. 1 to 4, in one embodiment, the exterior decoration assembly 10 includes a glass 100, a first fixing member 200, an exterior decoration member 400, and a second fixing member 300. The glass 100 includes a mounting surface 120 and a rear surface 130 opposite to the mounting surface 120, and the glass 100 is provided with a mounting hole 110 extending through the mounting surface 120. The firs fixing member 200 is connected to the glass 100, and at least a partial structure of the first fixing member 200 is provided in the mounting hole 110. The exterior decoration member 400 is located on a side where the mounting surface 120 is located, and the exterior decoration member 400 is connected to a side of the first fixing member 200 adjacent to the mounting surface 120 by the second fixing member 300.

During use, the detachable assembly of the glass 100 and the exterior decoration member 400 can be achieved by connecting the first fixing member 200 and the second fixing member 300. In addition, since the partial structure of the first fixing member 200 extends into the mounting hole 110, compared with the conventional exterior decoration assembly 10 in which the glass 100 and the exterior decoration 400 are connected by a connection structure provided between the glass 100 and the exterior decoration member 400, the surface difference between the exterior decoration 400 and the glass 100 in the present disclosure after connected by the first fixing member 200 and the second fixing member 300 will be relatively small, and the exterior decoration member 400 occupies a relatively small space when assembled, thereby reducing wind noise and provide a relatively higher freedom in styling design.

It should be noted that, the partial structure of the first fixing member 200 can protrude from the mounting surface 120. Alternatively, along an axial direction of the mounting hole 110, the first fixing member 200 can be completely located on the side of the mounting surface 120 facing the rear surface 130.

For example, in some embodiments, the partial structure of the first fixing member 200 protrudes from the mounting surface 120 along the mounting hole 110 and is connected to the second fixing member 300. Further, compared with the conventional method of locating the first fixing member 200 completely on the mounting surface 120, in this embodiment, the partial structure of the first fixing member 200 protrudes from the mounting surface 120, which can reduce the surface difference between the exterior decoration member 400 and the mounting surface 120 to a certain extent.

In some embodiments, the first fixing member 200 includes a main body part 210 and a fixing part 220 that are connected to each other. A volume of the main body part 210 is greater than a volume of the fixing part 220. The main body part 210 is located on a side of the mounting surface 120 facing the rear surface 130, and the partial structure of the fixing part 220 extends out of the mounting hole 110 and is connected to the second fixing member 300. As such, the main body part 210 with greater volume is provided on the side of the mounting surface 120 facing the rear surface 130, and the fixing part 220 protrudes from the mounting hole 110 and is connected to the second fixing member 300, which can reduce the space occupied by the first fixing member 200 to a certain extent, and thus reduce the surface difference between the exterior decoration member 400 and the glass 100. The exterior decoration member 400 also occupies a relatively small space during assembly, thereby reducing wind noise and providing a relatively higher freedom in styling design.

For example, in another embodiments, along the axial direction of the mounting hole 110, the first fixing member 200 is located on the side of the mounting surface 120 facing the rear surface 130. One end of the second fixing member 300 is connected to the exterior decoration member 400, the second fixing member 300 is connected to the exterior decoration member 400, and the other end of the second fixing member 300 extends into the mounting hole 110 from the side of the glass 100 locating on the mounting surface 120 and is detachably connected to the first fixing member 200.

Referring to FIG. 3, the axial direction of the mounting hole 110 refers to the L direction. It should be understood that, the first fixing member 200 being located on the side of the mounting surface 120 facing the rear surface 130 means that, in the axial direction of the mounting hole 110, the first fixing member 200 is located below the mounting surface 120 in the viewing angle of FIG. 3. The first fixing member 200 being located below the mounting surface 120 means that the first fixing member 200 does not protrude from the side of the mounting surface 120 relative to the mounting surface 120. In this case, when the first fixing member 200 extends into the mounting hole 110, the surface difference between the glass 100 and the exterior decoration member 400 can be reduced as much as possible.

It should be noted that the surface difference between the glass 100 and the exterior decoration member 400 refers to a distance between a side surface of the exterior decoration member 400 facing the mounting surface 120 and the mounting surface 120 when the exterior decoration member 400 is assembled with the glass 100 through the second mounting member and the first mounting member. The smaller the distance, the smaller the surface difference between the exterior decoration member 400 and the glass 100. In other words, the smaller the distance, the closer of the assembly between the exterior decoration member 400 and the glass 100.

In the above exterior decoration assembly 10, the detachable assembly of the glass 100 and the exterior decoration member 400 is achieved by connecting the first fixing member 200 and the second fixing member 300. Further, the first fixing member 200 is located on the side of the mounting surface 120 facing the rear surface 130 in the axial direction of the mounting hole 110, which means that the first fixing member 200 does not protrude relative to the mounting surface 120, therefore, the surface difference between the exterior decoration member 400 and the glass 100 is relatively small when the second fixing member 300 extends from the side of the glass 100 locating on the mounting surface 120 into the mounting hole 110 and is connected to the first fixing member 200, and the exterior decoration member 400 also occupies a relatively smaller space when assembled, thereby reducing wind noise and providing a relatively higher freedom in styling design.

In some embodiments, one of the first fixing member 200 and the second fixing member 300 is provided with an external thread structure, and the other one of the first fixing member 200 and the second fixing member 300 is provided with an internal thread hole, and the first fixing member 200 and the second fixing member 300 is connected by cooperation of the external thread structure and the internal thread hole.

Optionally, in one of the embodiments, the first fixing member 200 is a bolt, the second fixing part 300 is a nut structure. The nut part of the nut structure is provided in the mounting hole 110. One end of the bolt is connected to the exterior decoration member 400, and the other end extends into the mounting hole 110 and is screwed with the nut, thereby achieving detachable assembly between the exterior decoration member 400 and the glass 100.

In other embodiments, the first fixing member 200 and the second fixing member 300 can both be snap-fit members. For example, the first fixing member 200 is a first snap-fit member, and the second fixing member 300 is a second snap-fit member, and the detachable assembly between the exterior decoration member 400 and the glass 100 can be achieved by snap-fit cooperation of the first snap-fit member and the second snap-fit member.

For example, in some embodiments, the first fixing member 200 is provided with a protrusion structure, and the second fixing member 300 is provided with a groove structure. Alternatively, in other embodiments, the first fixing member 200 is provided with a groove structure, and the second fixing member 300 is provided with a protrusion structure. The snap-fit cooperation of the first fixing member 200 and the second fixing member 300 can be achieved by the snap-fit cooperation between the groove structure and the protrusion structure, thereby achieving detachable connection between the glass 100 and the exterior decoration member 400.

Referring to FIG. 1, in some embodiments, the exterior decoration member 400 covers the mounting surface 120.

For example, in some embodiments, the exterior decoration member 400 has a length of M and a width of B, and the total area of the exterior decoration member 400 is 272mm×418 mm=113,696mm². In an overlapping portion of the exterior decoration member 400 and the mounting surface 120, the exterior decoration member 400 has a length of M1 and a width of B1, and the overlapping area of the exterior component 400 with the mounting surface 120 is 200mm×400mm=80,000mm². It can be seen that the area of the overlapping portion in the exterior decoration member 400 accounts for about 70% of the total area.

In some embodiments, a sealing member is provided between a peripheral side of a partial structure of the exterior decoration member 400 covering the mounting surface 120 and the mounting surface 120. In this way, the waterproof and dustproof function is achieved by providing the seal member.

Optionally, the seal member can be a foam strip.

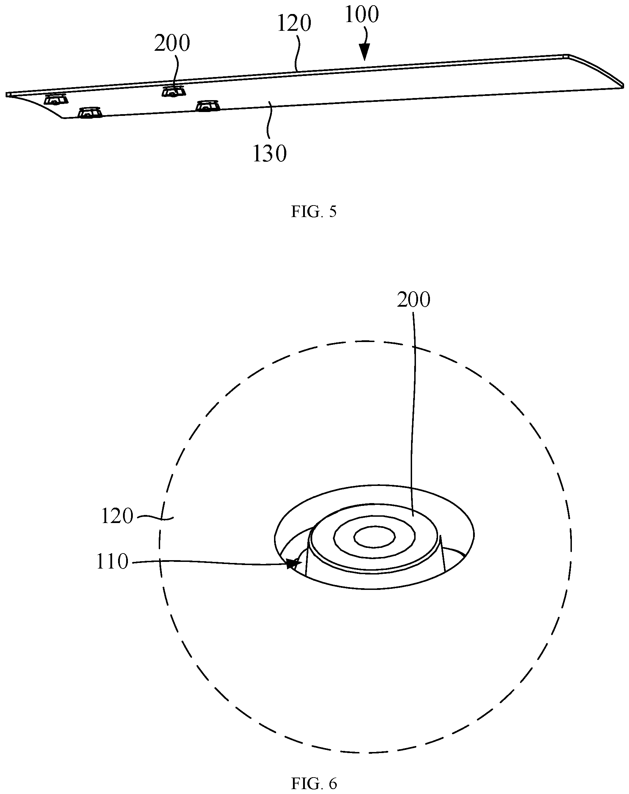

FIG. 5 is a schematic view of the glass 100 in a viewing angle of the rear surface 130. FIG. 6 is a partially enlarged view of A in FIG. 4. Referring to FIGS 3 to 6, in some embodiments, the mounting hole 110 extends from the mounting surface 120 to the rear surface 130 along a thickness direction of the glass 100. A partial structure of the first fixing member 120 extends into the mounting hole 110 from a side of the rear surface 130, and a remaining structure of the first fixing member 200 is provided outside the mounting hole 110 and is located on the side of the rear surface 130. As such, compared with providing the first fixing member 200 on the mounting surface 120, providing the first fixing member 200 on the rear surface 130 can avoid the problem of a larger surface difference between the exterior decoration member 400 and the glass 100 due to the arrangement of the first fixing member 200 between the glass 100 and the exterior decoration member 400.

Referring to FIG. 3, in some embodiments, the exterior decoration assembly 10 further includes an encapsulation 500. The encapsulation 500 is connected to the rear surface 130, and a structure of the first fixing member 200 located outside the mounting hole 110 is provided inside the encapsulation 500.

The encapsulation 500 is configured to cover the glass 100. There are many ways to provide a partial structure of the first fixing member 200 inside the encapsulation 500. For example, in some embodiments, the first fixing member 200 and the encapsulation 500 can be integrally formed by injection molding, such that the partial structure of the first fixing member 200 is provided inside the encapsulation 500. In other embodiments, a corresponding receiving groove can also be provided inside the encapsulation 500, and the partial structure of the first fixing member 200 can be fixedly provided inside the receiving groove.

Referring to FIG. 3, the main body part 210 is provided in the encapsulation 500.

In some embodiments, the glass 100, the first fixing member 200, and the encapsulation 500 are integrally formed. For example, the glass 100, the first fixing member 200, and the encapsulation 500 can be integrally formed by injection molding.

Referring to FIG. 3 continually, in some embodiments, the exterior decoration member 400 is provided with a connection hole 412, which is correspondingly connected to the mounting hole 110. One end of the first fixing member 200 is fixedly provided in the connection hole 412, and the other end of the second fixing member 300 extends through the connection hole 412, extends into the mounting hole 110, and is detachably connected to the first fixing member 200.

For example, referring to FIG. 3 continually, in some embodiments, the connection hole 412 is a stepped hole in communication with the mounting hole 110 correspondingly. One end of the second fixing member 300 is limitedly fitted with a step surface of the stepped hole, and the other end of the second fixing member 300 extends through the stepped hole, extends into the mounting hole 110, and is detachably connected to the first fixing member 200. As such, the second fixing member 300 is fixed on the installation member by limiting fit with the stepped surface of the stepped hole, and the second fixing member 300 is connected to the first fixing member 200 by extending into the mounting hole 110 to achieve connection to the glass 100.

Referring to FIGS. 2 and 3, in some embodiment, the exterior decoration member 400 is provided with a mounting groove 410, and the connection hole 412 extends through a bottom wall of the mounting groove 410. The exterior decoration assembly 10 further includes a flip cover 600. The flip cover 600 is movably provided on the exterior decoration member 400 and configured to open or close the mounting groove 410. After the assembly of the first fixing member 200 and the second fixing member 300 is completed, the mounting groove 410 can be closed by the flip cover 600. As such, on the one hand, the second fixing member 300 can be protected, and on the other hand, a more appeal appearance can be presented.

The number of the mounting hole 110, the number of the first fixing member 200, and the second fixing member 300 are at least two and correspond one to one. A part of the first fixing member is provided with an external thread structure, a corresponding part of the second fixing member 300 is provided with an internal thread hole matching with the external thread structure, a remaining part of the first fixing member 200 is provided with a first snap-fit member, and a remaining part of the second fixing member 300 corresponding to the remaining part of the first fixing member is provided with a second snap-fit member in a snap-fit cooperation with the first snap-fit member. In this way, the glass 100 and the exterior decoration member 400 are connected by a combination of screw connection and snap-fit cooperation. Referring to FIG. 2, the mounting groove 410 is a square groove. For the mounting stability, stepped holes are correspondingly provided at four corners of the mounting groove 410. Correspondingly, four corresponding mounting holes are also provided on the glass 100, and four first fixing members 200 and four second fixing member 300 are both provided, correspondingly. Each first fixing member 200 is correspondingly provided in each mounting hole 110, and each second fixing member 300 correspondingly extends through each stepped hole and is connected to the first fixing member 200 located in the mounting hole 110.

It should be noted that the number of the stepped hole, mounting hole 110, first fixing member 200 and second fixing member 300 can also be 1, 2, 3, 5 or more. The number of the stepped hole, mounting hole 110, first fixing member 200 and second fixing member 300 can be configured according to specific needs, for example, according to the size of the exterior decoration member 400 and the size of the glass 100. In addition, the distribution manner of the stepped hole and the mounting hole 110 can also be configured as needed. For example, they can be provided at intervals along the same direction, or can be surrounded to form a circle or other irregular shapes.

It should be noted that there are many ways to achieve that the flip cover 600 is movably provided on the exterior decoration member 400. For example, the flip cover 600 can be slidably mounted on the exterior decoration member 400, or can also be rotatably mounted on the exterior decoration member 400.

In some embodiments, the exterior assembly 10 further includes a locking structure. When the flip cover 600 covers the mounting groove 410, the flip cover 600 is locked on the exterior decoration member 400 through the locking structure. When the mounting groove 410 needs to be opened, the locking structure is unlocked to open the flip cover 600.

The locking structure may be a snap-fit structure. For example, the flip cover 600 is provided with a protrusion structure, and the exterior decoration member 400 is provided with a groove structure. Alternatively, the flip cover 600 is provided with a groove structure, and the exterior decoration member 400 is provided with a protrusion structure, and the locking fit between the flip cover 600 and the exterior decoration member 400 can be achieved through the snap-fit cooperation between the groove and the protrusion.

Alternatively, in some other embodiments, the locking structure may be a magnetic attraction structure. For example, the flip cover 600 is provided with a first magnetic attraction portion, the exterior decoration member 400 is provided with a second magnetic attraction portion, and the first magnetic attraction portion and the second magnetic attraction portion have opposite magnetism, such that the locking fit between the flip cover 600 and the exterior decoration member 400 can be achieved by magnetic attraction cooperation between the first magnetic attraction portion and the second magnetic attraction portion.

Further, the present disclosure also relates to an automobile, including the exterior decoration assembly 10 as described in any one of the above embodiments.

The above-mentioned automobile includes the exterior decoration assembly 10 of any one of the aforementioned embodiments. Therefore, in the automobile, the detachable assembly of the glass 100 and the exterior decoration member 400 can be achieved by connecting the first fixing member 200 to the second fixing member 300. In addition, the first fixing member 200 is located below the mounting surface 120 in the axial direction of the mounting hole 110, which means that the first fixing part 200 does not protrude relative to the mounting surface 120. Therefore, when the second fixing member 300 extends from the side of the glass 100 located on the mounting surface 120 into the mounting hole 110 and is connected to the first fixing member 200, the surface difference between the exterior decoration member 400 and the glass 100 is small, and the exterior decoration member 400 occupies a relatively smaller space during assembly, thus not affecting the normal assembly of other components.

In the present disclosure, unless otherwise specified and defined explicitly, the terms "install", "connect", "join", and "fix" should be understood in a broad sense. For example, they may refer to a fixed connection, a detachable connection, or an integral connection; may refer to a mechanical connection or electrical connection; and may refer to a direct connection, an indirect connection via an intermediate medium, an internal connection between two elements, or interaction between two elements. Those of ordinary skill in the art can understand specific meanings of these terms in the present disclosure according to specific situations.

In the present disclosure, unless otherwise specified and defined explicitly, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of" the second feature may be the case that the first feature is directly above or obliquely above the second feature, or only means that the level of the first feature is higher than that of the second feature. The expression the first feature being "below", "underneath" or "under" the second feature may be the case that the first feature is directly underneath or obliquely underneath the second feature, or only means that the level of the first feature is lower than that of the second feature.

It should be noted that when one element is referred to as "fixed to" or "provided on" another element, it may be directly disposed on the other element or an intermediate element may exist. When one element is considered to be "connected to" another element, it may be directly connected to the other element or an intermediate element may co-exist. The terms "vertical", "horizontal", "upper", "lower", "left", "right" and similar expressions used herein are for illustrative purposes only and do not represent the only implementation.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the concept of the present disclosure, and these all fall within the protection scope of the present disclosure. Therefore, the patent protection scope of the present disclosure should be subject to the appended claims.

## Claims

1. An exterior decoration assembly, comprising:
a glass comprising a mounting surface and a rear surface opposite to the mounting surface, and the glass being provided with a mounting hole extending through the mounting surface;
a first fixing member, at least a partial structure of the first fixing member being provided in the mounting hole and fixedly connected to the glass; and
an exterior decoration member and a second fixing member, the exterior decoration member being located on a side where the mounting surface is located, and the exterior decoration member being connected to a side of the first fixing member adjacent to the mounting surface by the second fixing member.

2. The exterior decoration assembly according to claim 1, wherein the partial structure of the first fixing member protrudes from the mounting surface along the mounting hole and is connected to the second fixing member.

3. The exterior decoration assembly according to claim 2, wherein the first fixing member comprises a main body part and a fixing part that are connected to each other, a volume of the main body part is greater than a volume of the fixing part, the main body part is located on a side of the mounting surface facing the rear surface, and a partial structure of the fixing part extends out of the mounting hole and is connected to the second fixing member.

4. The exterior decoration assembly according to claim **1,** wherein along an axial direction of the mounting hole, the first fixing member is located on a side of the mounting surface facing the rear surface, and the second fixing member is configured as being capable of being detachably connected to the first fixing member by extending into the mounting hole along a side of the mounting surface, such that the exterior decoration member is connected to the glass.

5. The exterior decoration assembly according to claim 4, wherein the mounting hole extends from the mounting surface to the rear surface along a thickness direction of the glass, and the partial structure of the first fixing member extends into the mounting hole from a side of the rear surface, and a remaining structure of the first fixing member is provided outside the mounting hole and located on the side of the rear surface.

6. The exterior decoration assembly according to claim 5, further comprising an encapsulation connected to the rear surface, wherein the structure of the first fixing member located outside the mounting hole is provided inside the encapsulation.

7. The exterior decoration assembly according to claim 6, wherein the glass, the first fixing member, and the encapsulation are integrally formed.

8. The exterior decoration assembly according to any one of claims 2 to 7, wherein the exterior decoration member is provided with a connection hole correspondingly connected to the mounting hole, and one end of the first fixing member is fixedly provided in the connection hole, and another end of the second fixing member extends through the connection hole, extends into the mounting hole, and is detachably connected to the first fixing member.

9. The exterior decoration assembly according to claim 8, wherein the connection hole is a stepped hole, one end of the second fixing member is limitedly fitted with a step surface of the stepped hole, and another end of the second fixing member extends through the stepped hole, extends into the mounting hole, and is detachably connected to the first fixing member.

10. The exterior decoration assembly according to claim 9, wherein the exterior decoration member is provided with a mounting groove, and the connection hole extends through a bottom wall of the mounting groove, and the exterior decoration assembly further comprises a flip cover movably provided on the exterior decoration member and configured to open or close the mounting groove.

11. The exterior decoration assembly according to any one of claims 2 to 7, wherein the exterior decoration member covers the mounting surface.

12. The exterior decoration assembly according to claim 11, wherein a sealing member is provided between a peripheral side of a partial structure of the exterior decoration member covering the mounting surface and the mounting surface.

13. The exterior decoration assembly according to any one of claims 2 to 7, wherein one of the first fixing member and the second fixing member is provided with an external thread structure, and another one is provided with an internal thread hole, and the external thread structure is fitted and connected to the internal thread hole;
or one of the first fixing member and the second fixing member is a first snap-fit member, and another is a second snap-fit member in a snap-fit cooperation with the second snap-fit member.

14. The exterior decoration assembly according to any one of claims 2 to 7, wherein a number of the mounting hole, a number of the first fixing member, and a number of the second fixing member is at least two and correspond one to one, wherein a part of the first fixing member is provided with an external thread structure, a corresponding part of the second fixing member is provided with an internal thread hole matching with the external thread structure, a remaining part of the first fixing member is provided with a first snap-fit member, and a remaining part of the second fixing member corresponding to the remaining part of the first fixing member is provided with a second snap-fit member in a snap-fit cooperation with the first snap-fit member.

15. An automobile, comprising the exterior decoration assembly according to any one of claims 1 to 14.
